# EUROPÄISCHE PATENTSCHRIFT

(11) **EP 4 227 839 B1**
(45) Veröffentlichungstag und Bekanntmachung des Hinweises auf die Patenterteilung: **17.07.2024**
(21) Anmeldenummer: 22155944.6
(22) Anmeldetag: 09.02.2022
(51) Int. Cl.: G06F 21/62, G06Q 10/1091, G07C 1/10

(54) **ZEIT- UND/ODER ANWESENHEITSERFASSUNGSEINRICHTUNG; SYSTEM; VERFAHREN ZUM BETREIBEN EINER ZEIT- UND/ODER ANWESENHEITSERFASSUNGSEINRICHTUNG; COMPUTERPROGRAMMPRODUKT**
TIME AND/OR PRESENCE DETECTION DEVICE; SYSTEM; METHOD FOR OPERATING A TIME AND/OR PRESENCE DETECTION DEVICE; COMPUTER PROGRAM PRODUCT
DISPOSITIF DE DÉTECTION D'HEURE ET/OU DE PRÉSENCE, SYSTÈME, PROCÉDÉ DE FONCTIONNEMENT D'UN DISPOSITIF DE DÉTECTION D'HEURE ET/OU DE PRÉSENCE, PRODUIT-PROGRAMME INFORMATIQUE

(43) Veröffentlichungstag der Anmeldung: 16.08.2023
(73) Patentinhaber: dormakaba EAD GmbH, 78056 Villingen-Schwenningen (DE)
(72) Erfinder: Reinbold, Andreas, 78056 Villingen-Schwenningen (DE); Ruof, Martin, 78056 Villingen-Schwenningen (DE); Meiss, Elmar, 78056 Villingen-Schwenningen (DE); Koeppinger, Hartmut, 78056 Villingen-Schwenningen (DE); Schwab, Heinz, 78056 Villingen-Schwenningen (DE)
(74) Vertreter: Balder IP Law, S.L.

(56) Entgegenhaltungen:
- JP-A- 2001 184 308
- US-A1- 2021 326 811

## Beschreibung

Die vorliegende Erfindung betrifft eine Zeit- und/oder Anwesenheitserfassungseinrichtung sowie ein Verfahren zum Betreiben einer Zeit- und/oder Anwesenheitserfassungseinrichtung. Ferner betrifft die Erfindung ein System, aufweisend eine derartige Zeit- und/oder Anwesenheitserfassungseinrichtung und ein mobiles Endgerät. Des Weiteren betrifft die Erfindung ein Computerprogrammprodukt.

Zeit- und/oder Anwesenheitserfassungseinrichtungen sind allgemein bekannt und dienen beispielsweise zur Erfassung und zum Nachhalten der Arbeitszeiten von in einem Unternehmen beschäftigten Personen. Auch für andere Personen, beispielsweise externe Dienstleister, können derartige Vorrichtungen Anwendung finden. Solche Zeit- und/oder Anwesenheitserfassungseinrichtungen sind häufig im Eingangsbereich von Gebäuden angebracht, sodass die Beschäftigten die Vorrichtungen zu Beginn ihrer Arbeitszeit und zum Ende ihrer Arbeitszeit erreichen.

JP 2001 184308 A offenbart ein System, bestehend aus einem Zeitaufzeichnungsterminal, das mit Mitteln zur Speicherung von Zeitinformationen versehen ist, um Zeitinformationen zu einem Zeitpunkt zu speichern, der der Identifikationsinformation eines Bedieners mit der vorgeschriebenen Bedienung dieses Bedieners entspricht, ein Ausgabemittel zum Ausgeben einer an den Bediener adressierten Nachricht und ein Kommunikationsmittel zum Ausführen einer Datenkommunikation mit externen Geräten und einem Computer zur Verteilung, der über das Kommunikationsmittel mit jedem der Zeitaufzeichnungs-Terminals verbunden ist, um die an den registrierten Bediener adressierte Nachricht an jedes der Zeitaufzeichnungs-Terminals zu verteilen, wobei auf der Grundlage der vorgeschriebenen Bedienung des Bedieners die an diesen Bediener adressierte Nachricht von dem Ausgabemittel ausgegeben wird.

An die Handhabung und das Nachhalten von personenbezogenen Daten werden dabei immer höhere Anforderungen gestellt, um beispielsweise einen entsprechenden Datenschutz zu gewährleisten. Geleichzeitig arbeiten immer mehr Menschen mobil an verschiedenen Orten.

Es besteht daher Bedarf an Systemen, die eine zuverlässige Zeit- und Anwesenheitserfassung ermöglichen und die gleichzeitig effizient funktionieren, um unnötige Wartezeiten für die Nutzer zu vermeiden, insbesondere zu Stoßzeiten oder typischen Zeiten für Schichtwechsel morgens oder abends. Ferner besteht Bedarf an Lösungen, die einen möglichst hohen Datenschutz erlauben und gleichzeitig eine kosten- und zeiteffiziente Handhabung ermöglichen.

Vor diesem Hintergrund stellt sich die Aufgabe, eine effiziente Zeit- und/oder Anwesenheitserfassungseinrichtung bereitzustellen, mit der eine hohe Datensicherheit und/oder ein vorteilhafter Nutzerkomfort realisierbar ist. Es stellt sich ferner die Aufgabe, ein entsprechendes Verfahren zum Betreiben einer Zeit- und/oder Anwesenheitserfassungseinrichtung und ein entsprechendes System bereitzustellen.

Die Aufgabe wird gelöst durch eine Zeit- und/oder Anwesenheitserfassungseinrichtung, wobei die Zeit- und/oder Anwesenheitserfassungseinrichtung eine Wiedergabeeinrichtung aufweist, wobei die Zeit- und/oder Anwesenheitserfassungseinrichtung derart konfiguriert ist, dass eine Wiedergabe von personenbezogenen Informationen einer Person mithilfe der Wiedergabeeinrichtung in Abhängigkeit davon erfolgt, welchem Informationstyp aus einer Mehrzahl von Informationstypen die personenbezogenen Informationen zugeordnet sind.

Hierdurch ist es erfindungsgemäß möglich, eine vorteilhafte Datensicherheit zu erzielen. Insbesondere ist es erfindungsgemäß denkbar, dass die Wiedergabe von personenbezogenen Informationen einer Person mithilfe der Wiedergabeeinrichtung derart in Abhängigkeit des zugeordneten Informationstyps erfolgt, dass nicht alle personenbezogenen Daten mithilfe der Wiedergabeeinrichtung wiedergegeben werden, sondern lediglich ein Teil aller vorhandenen personenbezogenen Daten einer Person. Somit kann die Wiedergabe von persönlichen Daten oder solchen Daten, die nicht öffentlich geteilt werden sollen oder die nicht für Dritte erkennbar sein sollen, durch die Zeit- und/oder Anwesenheitserfassungseinrichtung verhindert werden. Dies ist insbesondere daher besonders vorteilhaft, da sich die Zeit- und/oder Anwesenheitserfassungseinrichtung typischerweise in einem Gebäude und/oder Areal befindet, und zu Stoßzeiten von einer Vielzahl von Personen in kurzen Abständen passiert wird. Eine Wiedergabe von personenbezogenen Informationen durch die Wiedergabeeinrichtung der Zeit- und/oder Anwesenheitserfassungseinrichtung kann daher häufig auch von Dritten wahrnehmbar ist, die sich in der Umgebung der Zeit- und/oder Anwesenheitserfassungseinrichtung aufhalten. Erfindungsgemäß ist es in vorteilhafter Weise möglich, dass durch die Zuordnung von personenbezogenen Informationen zu Informationstypen ein unerwünschtes Zugänglichmachen von privaten Informationen einer bestimmten Person an Dritte, die sich in der Umgebung der Zeit- und/oder Anwesenheitserfassungseinrichtung aufhalten, verhindert wird.

Ferner kann erfindungsgemäß eine vorteilhafte Effizienz und Zeitersparnis erzielt werden. Eine Zeit- und/oder Anwesenheitserfassungseinrichtung ist insbesondere zur Zeit- und/oder Anwesenheitserfassung von Personen, beispielsweise von Angestellten eines Unternehmens, konfiguriert und wird durch die Personen somit ohnehin täglich passiert bzw. verwendet, typischerweise zu Beginn und zum Ende ihrer Arbeitszeit. Erfindungsgemäß kann eine vorteilhafte verbesserte Ausnutzung der Funktionalität einer Zeit- und/oder Anwesenheitserfassungseinrichtung erreicht werden, wobei eine solche ohnehin von den Personen genutzte Zeit- und/oder Anwesenheitserfassungseinrichtung zur Wiedergabe von personenbezogenen Informationen verwendet werden kann, um den Personen relevante personenbezogene Informationen mitzuteilen. Beispielsweise können die personenbezogenen Informationen Mitteilungen oder Anfragen einer Personalabteilung eines Unternehmens umfassen, oder die Darstellung eines Arbeitszeitkalenders oder Urlaubkalenders. Es ist denkbar, dass eine Person über eine Eingabeeinrichtung der Zeit- und/oder Anwesenheitserfassungseinrichtung personenbezogene Informationen eingeben und/oder ändern kann. Beispielswiese könnte die Person über die Eingabeeinrichtung der Zeit- und/oder Anwesenheitserfassungseinrichtung Urlaubszeiten eintragen oder beantragen oder eine Nachricht an die Personalabteilung erstellen und versenden.

Vorzugsweise umfassen personenbezogene Informationen im Sinne der vorliegenden Erfindung die als Teil der personenbezogenen Daten einer Person vorhandene Informationen. Unter personenbezogenen Daten können gemäß einer Ausführungsform der vorliegenden Erfindung insbesondere Daten verstanden werden, die derart personenbezogen sind, dass sie eindeutig einer bestimmten natürlichen Person zugeordnet sind oder diese Zuordnung zumindest mittelbar erfolgen kann. Die personenbezogenen Daten können erfindungsgemäß daher auch personenbeziehbare Daten umfassen. Es ist denkbar, dass personenbezogene Daten gemäß einer Ausführungsform der vorliegenden Erfindung Personalstammdaten umfassen. Gemäß einer Ausführungsform der vorliegenden Erfindung ist es denkbar, dass die personenbezogenen Daten ein personenbezogenes Arbeitszeitprofil, insbesondere zur Erfassung von Anwesenheitszeiten und/oder Arbeitszeiten pro Person, umfassen. Gemäß einer Ausführungsform der vorliegenden Erfindung ist es denkbar, dass die personenbezogenen Daten Nachrichten von einer Personalabteilung eines Unternehmens an eine Person, insbesondere einen Angestellten des Unternehmens, umfassen. Gemäß einer Ausführungsform der vorliegenden Erfindung ist es denkbar, dass die personenbezogenen Daten Nachrichten von einer Person, insbesondere einem Angestellten des Unternehmens, an eine Personalabteilung des Unternehmens umfassen.

Die "Mehrzahl von Informationstypen" umfasst zumindest zwei unterschiedliche Informationstypen. Es ist erfindungsgemäß denkbar, dass die Mehrzahl von Informationstypen mehr als zwei unterschiedliche Informationstypen umfasst, beispielsweise drei oder vier unterschiedliche Informationstypen. Die "Informationstypen" können gemäß einer Ausführungsform auch als Kategorien verstanden werden, in die personenbezogene Informationen einteilbar sind.

Die erfindungsgemäße Zeiterfassungseinrichtung und/oder Anwesenheitserfassungseinrichtung kann insbesondere als Arbeitszeiterfassungseinrichtung zur Erfassung von Arbeitszeiten von Personen ausgebildet sein.

Die erfindungsgemäße Zeit- und/oder Anwesenheitserfassungseinrichtung weist insbesondere Computermittel auf, mit deren Hilfe die Konfiguration der Zeit- und/oder Anwesenheitserfassungseinrichtung implementiert ist.

Die erfindungsgemäße Zeit- und/oder Anwesenheitserfassungseinrichtung ist vorzugsweise in oder an einem Gebäude und/oder Areal anbringbar, aufstellbar und/oder montierbar. Als Gebäude und/oder Areal kann gemäß der vorliegenden Erfindung insbesondere auch ein Standort eines Unternehmens verstanden werden.

Vorteilhafte Weiterbildungen und Ausgestaltungen der vorliegenden Erfindung können den abhängigen Ansprüchen entnommen werden.

Es ist vorgesehen, dass die Mehrzahl von Informationstypen zumindest einen ersten Informationstyp umfasst, wobei die Zeit- und/oder Anwesenheitserfassungseinrichtung derart konfiguriert ist, dass personenbezogenen Informationen, die dem ersten Informationstyp zugeordnet sind, mithilfe der Wiedergabeeinrichtung wiedergebbar sind. Dem ersten Informationstyp sind vorzugsweise öffentliche personenbezogene Informationen zugeordnet, also solche Informationen, von denen auch Dritte Kenntnis erlangen dürfen. Personenbezogene Informationen, die dem ersten Informationstyp zugeordnet sind, können daher in unkritischer Weise durch die Wiedergabeeinrichtung wiedergegeben werden.

Es ist vorgesehen, dass die Mehrzahl von Informationstypen zumindest einen zweiten Informationstyp umfasst, wobei die Zeit- und/oder Anwesenheitserfassungseinrichtung derart konfiguriert ist, dass eine Wiedergabe durch die Wiedergabeeinrichtung von personenbezogenen Informationen, die dem zweiten Informationstyp zugeordnet sind, unterbunden wird. Dem zweiten Informationstyp sind vorzugsweise private personenbezogene Informationen zugeordnet, also insbesondere solche Informationen, die Dritten gegenüber geheim gehalten werden sollen. Personenbezogene Informationen, die dem zweiten Informationstyp zugeordnet sind, werden daher in vorteilhafter Weise nicht durch die Wiedergabeeinrichtung wiedergegeben, um zu verhindern, dass Dritte, die sich in der Umgebung der Zeit- und/oder Anwesenheitserfassungseinrichtung aufhalten, Kenntnis von dieses Informationen erhalten können. Hierdurch kann auf effiziente Weise ein verbesserter Datenschutz erreicht werden. Die Zeit- und/oder Anwesenheitserfassungseinrichtung ist vorzugsweise dennoch zur Wiedergabe personenbezogener Informationen, die dem ersten Informationstyp zugeordnet sind, konfiguriert und optional zur Eingabe und/oder Änderung von personenbezogenen Informationen durch eine Person nutzbar.

Es ist vorgesehen, dass die Zeit- und/oder Anwesenheitserfassungseinrichtung derart konfiguriert ist, dass über eine Nutzereingabe mithilfe einer Eingabeeinrichtung der Zeit- und/oder Anwesenheitserfassungseinrichtung durch eine Person festlegbar und/oder auswählbar ist, dass personenbezogene Informationen der Person, die dem zweiten Informationstyp zugeordnet sind, durch die Wiedergabeeinrichtung wiedergegeben werden, insbesondere für eine festgelegte oder festlegbare Zeitspanne. Über eine Eingabe an der Zeit- und/oder Anwesenheitserfassungseinrichtung kann eine Person somit vorzugsweise festlegen, dass das Unterbinden bzw. Verhindern der Wiedergabe einer personenbezogenen Information, die dem zweiten Informationstyp zugeordnet ist, vorzugsweise für eine festgelegte oder festlegbare Zeitspanne, aufgehoben wird. Hierdurch wird eine erhöhte Nutzerfreundlichkeit erreicht und der Nutzer hat eine besonders vorteilhafte Kontrolle über die Handhabung und Wiedergabe seiner personenbezogenen Informationen. Es ist gemäß einer Ausgestaltung der vorliegenden Erfindung beispielsweise denkbar, dass einer Person auf der Wiedergabeeinrichtung der Zeit- und/oder Anwesenheitserfassungseinrichtung ein Hinweis angezeigt wird, dass die Option bzw. Möglichkeit besteht, persönliche Informationen, die dem zweiten Informationstyp zugeordnet sind, für eine Zeitspanne von einigen Sekunden anzuzeigen. Beispielsweise ist es denkbar, dass auf dem Bildschirm der Zeit- und/oder Anwesenheitserfassungseinrichtung das folgende Textfeld angezeigt wird:
"Persönliche Informationen für fünf Sekunden anzeigen".

Ein solche Option bzw. Möglichkeit ist über die Eingabeeinrichtung durch die Person auswählbar.

Gemäß einer Ausführungsform der vorliegenden Erfindung ist es vorgesehen, dass die Zeit- und/oder Anwesenheitserfassungseinrichtung derart konfiguriert ist, dass über eine Nutzereingabe mithilfe einer Eingabeeinrichtung der Zeit- und/oder Anwesenheitserfassungseinrichtung durch eine Person eine manuelle Zuordnung von personenbezogenen Informationen der Person zu einem oder mehreren Informationstypen der Mehrzahl von Informationstypen festlegbar und/oder auswählbar ist,
vorzugsweise derart, dass die personenbezogenen Informationen durch die Person zumindest dem ersten Informationstyp und/oder dem zweiten Informationstyp zuordenbar sind. Es ist somit in besonders vorteilhafter Weise denkbar, dass eine Person über eine Eingabe an der Zeit- und/oder Anwesenheitserfassungseinrichtung selbst manuell einstellen kann, welche ihrer personenbezogenen Informationen, welchem Informationstyp zugeordnet werden. Hierdurch kann eine Person selbst beeinflussen und festlegen, welche ihrer personenbezogenen Informationen durch die Zeit- und/oder Anwesenheitserfassungseinrichtung wiedergegeben werden und welche nicht.

Gemäß einer Ausführungsform der vorliegenden Erfindung ist es vorgesehen, dass die Wiedergabeeinrichtung der Zeit- und/oder Anwesenheitserfassungseinrichtung als optische Wiedergabeeinrichtung, insbesondere als Bildschirm, ausgebildet ist. Die Wiedergabe von personenbezogenen Informationen umfasst dementsprechend eine Darstellung der Informationen mithilfe der optischen Wiedergabeeinrichtung. Alternativ oder zusätzlich zu einer optische Wiedergabeeinrichtung kann die Wiedergabeeinrichtung der Zeit- und/oder Anwesenheitserfassungseinrichtung beispielsweise auch eine akustische Wiedergabeeinrichtung umfassen.

Gemäß einer Ausführungsform der vorliegenden Erfindung ist es vorgesehen, dass die Zeit- und/oder Anwesenheitserfassungseinrichtung eine Kommunikationsschnittstelle zur Kommunikation mit einem Serversystem über eine Kommunikationsverbindung aufweist, wobei die Zeit- und/oder Anwesenheitserfassungseinrichtung
--- zum Empfangen und/oder Abrufen von personenbezogenen Daten, aufweisend personenbezogene Informationen, von dem Serversystem konfiguriert ist; und/oder
--- zum Übermitteln von personenbezogenen Daten, aufweisend personenbezogene Informationen, an das Serversystem konfiguriert ist. Die Zeit- und/oder Anwesenheitserfassungseinrichtung kann somit mit einem Serversystem kommunizieren. Es ist denkbar, dass die Zeit- und/oder Anwesenheitserfassungseinrichtung personenbezogene Informationen von dem Serversystem zur Wiedergabe mithilfe ihrer Wiedergabeeinrichtung empfängt. Es ist denkbar, dass die Zeit- und/oder Anwesenheitserfassungseinrichtung personenbezogene Informationen, die beispielsweise in Abhängigkeit einer Nutzerinterkation einer Person mit der Zeit- und/oder Anwesenheitserfassungseinrichtung erzeugt wurden oder über eine Eingabeeinrichtung der Zeit- und/oder Anwesenheitserfassungseinrichtung durch eine Person eingegeben wurden, an das Serversystem übermittelt.

Es ist denkbar, dass die Kommunikationsverbindung zwischen dem Serversystem und der Zeit- und/oder Anwesenheitserfassungseinrichtung über ein Kommunikationsnetz, beispielsweise ein unternehmensinternes Netzwerk, ausgebildet ist. Dieses Kommunikationsnetz kann beispielsweise mithilfe eines LAN oder eines WLAN ausgebildet sein. Für die Kommunikationsverbindung zwischen dem Serversystem und der Zeit- und/oder Anwesenheitserfassungseinrichtung bzw. das Kommunikationsnetz kommen eine Vielzahl drahtloser und/oder drahtgebundener Kommunikationstechniken und/oder -protokolle in Frage.

Gemäß einer Ausführungsform der vorliegenden Erfindung ist es vorgesehen, dass die Zeit- und/oder Anwesenheitserfassungseinrichtung einen lokalen Speicher aufweist oder mit einem lokalen Speicher verbunden ist, wobei die Zeit- und/oder Anwesenheitserfassungseinrichtung zum Speichern personenbezogener Daten, aufweisend personenbezogene Informationen, konfiguriert ist. Der lokale Speicher ist vorzugsweise ein nichtflüchtiger Speicher. Es ist denkbar, dass der lokale Speicher durch eine oder mehrere Speichereinheiten gebildet ist. Vorzugsweise sind in dem lokalen Speicher personenbezogene Daten speicherbar, die die Zeit- und/oder Anwesenheitserfassungseinrichtung von dem Serversystem empfängt oder abruft. Vorzugsweise sind in dem lokalen Speicher personenbezogene Daten speicherbar, die die Zeit- und/oder Anwesenheitserfassungseinrichtung in Folge von Nutzerinteraktionen mit der Zeit- und/oder Anwesenheitserfassungseinrichtung generiert oder empfängt, beispielsweise Zeitinformationen, betreffend einen Zeitpunkt, zu dem eine Nutzerinterkation mit der Zeit- und/oder Anwesenheitserfassungseinrichtung stattfindet, insbesondere zur Anwesenheitserfassung und/oder Arbeitszeiterfassung von Personen. Vorzugsweise sind in dem lokalen Speicher personenbezogene Daten speicherbar, die eine Person über eine Eingabeeinrichtung der Zeit- und/oder Anwesenheitserfassungseinrichtung eingibt.

Es ist gemäß einer Ausführungsform der vorliegenden Erfindung bevorzugt denkbar,
dass personenbezogene Daten in dem lokalen Speicher der Zeit- und/oder Anwesenheitserfassungseinrichtung verschlüsselt, beispielsweise kennwortverschlüsselt, gespeichert sind, und/oder
dass personenbezogene Daten mithilfe der Zeit- und/oder

Anwesenheitserfassungseinrichtung nur unter Verwendung einer Verschlüsselung, beispielswiese einer Kennwortverschlüsselung, abrufbar oder durch die Zeit- und/oder Anwesenheitserfassungseinrichtung anzeigbar bzw. darstellbar sind, beispielsweise auf einem Bildschirm der Zeit- und/oder Anwesenheitserfassungseinrichtung. Auch andere oder zusätzliche Schlüssel- bzw. Verschlüsselungsfunktionen sind denkbar. Hierdurch kann ein vorteilhafter Datenschutz erreicht werden.

Gemäß einer Ausführungsform der vorliegenden Erfindung ist es vorgesehen, dass die Zeit- und/oder Anwesenheitserfassungseinrichtung - bei einer Nutzerinteraktion einer Person mit der Zeit- und/oder Anwesenheitserfassungseinrichtung - zur Erfassung einer Zeitinformation, betreffend die Nutzerinteraktion, konfiguriert ist,
wobei die erfasste Zeitinformation zur Erfassung von Anwesenheitszeiten und/oder Arbeitszeiten dieser Person eingerichtet ist. Die erfasste Zeitinformation kann beispielsweise in dem lokalen Speicher der Zeit- und/oder Anwesenheitserfassungseinrichtung gespeichert werden und/oder an das Serversystem übermittelt werden. Die bei der Nutzerinteraktion erfasste Zeitinformation bezieht sich dabei insbesondere auf den Zeitpunkt der Nutzerinteraktion. Hierdurch können Anwesenheitszeit- und/oder Arbeitszeit-Profile für Personen in dem lokalen Speicher und/oder dem Serversystem hinterlegt sein, wobei die Anwesenheitszeiten und/oder Arbeitszeiten der Personen nachgehalten werden. Es ist denkbar, dass die in dem lokalen Speicher nachgehaltenen Anwesenheitszeiten und/oder Arbeitszeiten der Personen in regelmäßigen oder unregelmäßigen Abständen von der Zeit- und/oder Anwesenheitserfassungseinrichtung an das Serversystem übermittelt werden. Hierdurch kann ein Update der Anwesenheitszeiten und/oder Arbeitszeiten von Personen in dem zentralen Serversystem erfolgen.

Für die Nutzerinteraktionen, die Personen mit der Zeit- und/oder Anwesenheitserfassungseinrichtung durchführen, kommen erfindungsgemäß unterschiedliche technische Ausgestaltungen in Frage. Es ist denkbar, dass die Nutzerinteraktion einer Person mit der Zeit- und/oder Anwesenheitserfassungseinrichtung ein Empfangen und/oder Auslesen einer Identifikationsinformation dieser Person durch die Zeit- und/oder Anwesenheitserfassungseinrichtung umfasst, vorzugsweise wobei das Empfangen und/oder Auslesen der

Identifikationsinformation dieser Person durch:
- eine Eingabeeinrichtung der Zeit- und/oder Anwesenheitserfassungseinrichtung; und/oder
- eine Kommunikationsschnittstelle der Zeit- und/oder Anwesenheitserfassungseinrichtung; und/oder
- einen Sensor der Zeit- und/oder Anwesenheitserfassungseinrichtung erfolgt. Als Sensor kommen beispielsweise optische Sensoren in Frage, wobei die Nutzerinteraktion das Auslesen einer ID-Karte einer Person durch einen solchen Sensor umfasst. Alternativ oder zusätzlich kann die Nutzerinteraktion beispielsweise mithilfe von RFID (radio-frequency identification) und/oder NFC (near field communication) erfolgen. Eine Person führt hierfür eine entsprechende RFID-Identifikationsinformation oder eine NFC-Identifikationsinformation mit und die Zeit- und/oder Anwesenheitserfassungseinrichtung liest die RFID-Identifikationsinformation oder eine NFC-Identifikationsinformation als Teil der Nutzerinteraktion aus.

Gemäß einer Ausführungsform der vorliegenden Erfindung ist es vorgesehen, dass die Zeit- und/oder Anwesenheitserfassungseinrichtung derart konfiguriert ist, dass personenbezogene Informationen, die dem zweiten Informationstyp zugeordnet sind, von der Zeit- und/oder Anwesenheitserfassungseinrichtung an ein mobiles Endgerät der Person übermittelt werden. Hierdurch kann eine vorteilhafte private Wiedergabe der übermittelten Informationen, die dem zweiten Informationstyp zugeordnet sind, durch das mobile Endgerät der Person erfolgen. Es ist besonders bevorzugt, dass vor der Übermittlung dieser Informationen an das mobile Endgerät eine Authentisierung des mobilen Endgeräts durchgeführt wird. Hierdurch kann sichergestellt werden, dass die Informationen tatsächlich an das mobile Endgerät der richtigen Person übermittelt werden.

Ein weiterer Gegenstand der vorliegenden Erfindung ist ein System, aufweisend eine Zeit- und/oder Anwesenheitserfassungseinrichtung gemäß einer Ausführungsform der vorliegenden Erfindung und ein mobiles Endgerät, wobei das mobile Endgerät der Person zugeordnet ist,
wobei das System derart konfiguriert ist, dass personenbezogene Informationen, die dem zweiten Informationstyp zugeordnet sind, von dem Serversystem oder der Zeit- und/oder Anwesenheitserfassungseinrichtung an das mobiles Endgerät der Person übermittelt werden, wobei das mobile Endgerät vorzugsweise zur Wiedergabe der übermittelten personenbezogene Informationen, die dem zweiten Informationstyp zugeordnet sind, konfiguriert ist. Die Zeit- und/oder Anwesenheitserfassungseinrichtung ist vorzugsweise an oder in einem Gebäude und/oder Areal angeordnet. Hierdurch kann in besonders vorteilhafter Weise eine Übermittlung von personenbezogenen Informationen, die dem zweiten Informationstyp zugeordnet sind, an ein mobiles Endgerät eines Nutzers erfolgen. Auf dem mobilen Endgerät können diese Informationen dann mit erhöhter Sicherheit angezeigt werden, sodass Dritte keine Kenntnis von den Informationen erlangen können.

Es ist vorzugsweise denkbar, dass eine Zuordnung zwischen dem mobilen Endgerät, beispielsweise einer Telefonnummer des mobilen Endgeräts, und einer Person, beispielsweise einer Identifikationsinformation der Person, bekannt ist. Eine Zuordnung zwischen dem mobilen Endgerät und der Person, die eine Nutzerinteraktion mit der Zeit- und/oder Anwesenheitserfassungseinrichtung durchführt, ist vorzugsweise in dem lokalen Speicher der Zeit- und/oder Anwesenheitserfassungseinrichtung und/oder in dem Serversystem hinterlegt.

Da die Nutzerinteraktion der Person mit der Zeit- und/oder Anwesenheitserfassungseinrichtung ein Erhalten und/oder Auslesen der Identifikationsinformation der Person umfasst, erfolgt die Übermittlung der personenbezogenen Informationen, die dem zweiten Informationstyp zugeordnet sind, somit an das mobile Endgerät, das dieser Person zugeordnet ist. Bei dem mobilen Endgerät kann es sich beispielsweise um ein Mobiltelefon, ein Smartphone, ein Wearable oder einen Tablet-Computer handeln.

Gemäß einer Ausführungsform der vorliegenden Erfindung ist es vorgesehen, dass das System ferner das Serversystem umfasst, wobei das Serversystem insbesondere zur Kommunikation mit der Zeit- und/oder Anwesenheitserfassungseinrichtung über die Kommunikationsschnittstelle der Zeit- und/oder Anwesenheitserfassungseinrichtung konfiguriert ist. Die Kommunikation zwischen der Zeit- und/oder Anwesenheitserfassungseinrichtung kann drahtgebunden und/oder drahtlos erfolgen. Es ist gemäß einer Ausführungsform der vorliegenden Erfindung denkbar, dass das Serversystem mithilfe von einem oder mehreren Computern ausgebildet ist. Der eine oder die mehreren Computer des Serversystem können am gleichen Ort oder an unterschiedlichen Orten angeordnet sein.

Gemäß einer Ausführungsform der vorliegenden Erfindung, insbesondere des Systems, ist es vorgesehen, dass die Übermittlung der personenbezogenen Informationen, die dem zweiten Informationstyp zugeordnet sind, von dem Serversystem oder der Zeit- und/oder Anwesenheitserfassungseinrichtung an das mobile Endgerät über eine Nutzereingabe mithilfe einer Eingabeeinrichtung der Zeit- und/oder Anwesenheitserfassungseinrichtung durch die Person anweisbar ist. Es ist beispielsweise denkbar, dass einer Person auf der Wiedergabeeinrichtung der Zeit- und/oder Anwesenheitserfassungseinrichtung ein Hinweis angezeigt wird, dass die Option bzw. Möglichkeit besteht, Informationen, die dem zweiten Informationstyp zugeordnet sind, an das mobile Endgerät der Person zu übermitteln und/oder dass die Option bzw. Möglichkeit besteht, Informationen, die dem zweiten Informationstyp zugeordnet sind, auf dem mobilen Endgerät anzuzeigen. Beispielsweise ist es denkbar, dass auf dem Bildschirm der Zeit- und/oder Anwesenheitserfassungseinrichtung das folgende Textfeld angezeigt wird:
"Auf dem Mobiltelefon anzeigen".

Durch eine Eingabe mithilfe der Eingabeeinrichtung der Zeit- und/oder Anwesenheitserfassungseinrichtung kann die Person die angezeigte Option bzw. Möglichkeit auswählen und somit die Übermittlung der personenbezogenen Informationen, die dem zweiten Informationstyp zugeordnet sind, an das mobile Endgerät anweisen.

Gemäß einer Ausführungsform der vorliegenden Erfindung, insbesondere des erfindungsgemäßen Systems, ist es bevorzugt denkbar, ein unternehmensweites System zu implementieren, das zentral in einem Serversystem personenbezogene Daten der Mitarbeiterinnen und Mitarbeiter aufweist, wobei Zeit- und/oder Anwesenheitserfassungseinrichtungen, insbesondere Terminals, personenbezogenen Daten für den lokalen Standort, an dem sie angeordnet sind, von dem Serversystem erhalten bzw. beziehen und diese lokal in einem lokalen Speicher hinterlegen. Es ist dabei denkbar, dass die personenbezogenen Daten, die von den Zeit- und/oder Anwesenheitserfassungseinrichtungen bezogen werden, zusätzlich weiterhin in dem Serversystem gespeichert bleiben.

An dem Gebäude und/oder Areal bzw. dem Standort, an dem die Zeit- und/oder Anwesenheitserfassungseinrichtung angeordnet ist, können eine oder mehrere zusätzliche Zeit- und/oder Anwesenheitserfassungseinrichtungen vorhanden sein. Diese sind vorzugsweise der Zeit- und/oder Anwesenheitserfassungseinrichtung entsprechend konfiguriert. Es ist ferner denkbar, dass weitere Zeit- und/oder Anwesenheitserfassungseinrichtungen an weiteren Gebäuden und/oder weiteren Arealen angeordnet sind. Auch für diese kann ein Verfahren gemäß einer Ausführungsform der vorliegenden Erfindung implementiert werden.

Ein weiterer Gegenstand der vorliegenden Erfindung ist ein Verfahren zum Betreiben einer Zeit- und/oder Anwesenheitserfassungseinrichtung gemäß einer Ausführungsform der vorliegenden Erfindung,
wobei das Verfahren zumindest den folgenden Schritt umfasst:
- Wiedergeben von personenbezogenen Informationen einer Person mithilfe der Wiedergabeeinrichtung in Abhängigkeit davon, welchem Informationstyp aus einer Mehrzahl von Informationstypen die personenbezogenen Informationen zugeordnet sind.

Das erfindungsgemäße Verfahren ist insbesondere ein computerimplementiertes Verfahren, bei dem ein, mehrere oder alle Schritte des Verfahrens computerimplementiert ausgeführt werden.

Gemäß einer Ausführungsform der vorliegenden Erfindung ist es vorgesehen, dass in dem Serversystem und/oder in einem lokalen Speicher der Zeit- und/oder Anwesenheitserfassungseinrichtung personenbezogene Daten gespeichert sind, wobei die personenbezogenen Daten der Person mehrere personenbezogene Informationen umfassen,
wobei das Verfahren den folgenden Schritt umfasst:
- Zuordnen der personenbezogenen Informationen zu jeweils einem Informationstyp der Mehrzahl von Informationstypen, vorzugsweise wobei alle in den personenbezogenen Daten der Person vorhandenen personenbezogene Informationen einem Informationstyp der Mehrzahl von Informationstypen zugeordnet werden. Die Zuordnung erfolgt vorzugsweise mithilfe der Zeit- und/oder Anwesenheitserfassungseinrichtung, und/oder mithilfe einer Eingabe durch die Person und/oder mithilfe des Serversystems.

Gemäß einer Ausführungsform der vorliegenden Erfindung ist es vorgesehen, dass das Zuordnen der personenbezogenen Informationen zu einem Informationstyp der Mehrzahl von Informationstypen in Abhängigkeit einer durch die Person getroffenen Wahl und/oder in Abhängigkeit von durch die Person festgelegten Kriterien erfolgt. Es ist beispielsweise denkbar, dass die Person über eine Nutzereingabe Kriterien festlegen kann, anhand derer die Zuordnung ihrer personenbezogenen Informationen zu den verschiedenen Informationstypen erfolgt. Beispielsweise wäre es denkbar, dass die Person ein Kriterium festlegt, wonach alle Informationen, die ihren Namen und/oder andere persönliche Informationen aufweisen, dem zweiten Informationstyp zugeordnet werden, sodass diese nicht durch die Wiedergabeeinrichtung wiedergegeben werden. Die Eingabe kann beispielsweise über die Eingabereinrichtung der Zeit- und/oder Anwesenheitserfassungseinrichtung erfolgen oder alternativ über eine Schnittstelle des Serversystems.

Gemäß einer Ausführungsform der vorliegenden Erfindung ist es vorgesehen, dass das Zuordnen der personenbezogenen Informationen zu einem Informationstyp der Mehrzahl von Informationstypen bei der Erzeugung einer personenbezogenen Information erfolgt, insbesondere durch einen Betreiber oder Verwender des Serversystems. Die Erzeugung einer personenbezogenen Information kann dabei auch als Generierung bzw. Erstellung der personenbezogenen Information verstanden werden. Somit können personenbezogene Information bereits bei der Erzeugung, beispielsweise durch die Personalabteilung eines Unternehmens, den einzelnen Informationstypen zugeordnet werden. Die Zuordnung ist vorzugsweise später änderbar.

Gemäß einer Ausführungsform der vorliegenden Erfindung ist es vorgesehen, dass das Zuordnen der personenbezogenen Informationen zu einem Informationstyp der Mehrzahl von Informationstypen durch die Zeit- und/oder Anwesenheitserfassungseinrichtung durchgeführt wird. Vorzugsweise wird die Zuordnung hierbei anhand von festlegbaren Kriterien durchgeführt, beispielsweise derart, dass alle Informationen, die eine Namensangabe einer Person und/oder andere persönliche Informationen betreffen, automatisiert durch die Zeit- und/oder Anwesenheitserfassungseinrichtung dem zweiten Informationstyp zugeordnet werden, sodass diese nicht von der Zeit- und/oder Anwesenheitserfassungseinrichtung wiedergegeben werden.

Es ist gemäß einer Ausführungsform der vorliegenden Erfindung, insbesondere des Verfahrens, denkbar, dass die personenbezogenen Daten einer Person ein Informationspaket von personenbezogenen Informationen umfassen, das sensible Informationen aufweist. Es ist denkbar, dass eine Software der Zeit- und/oder Anwesenheitserfassungseinrichtung diese Informationen einem Informationstyp aus einer Mehrzahl von Informationstypen zuordnet, beispielsweise einem ersten Informationstyp "öffentlich" oder einem zweiten Informationstyp "persönlich". Es ist alternativ oder zusätzlich denkbar, dass die Person, beispielsweise vorher, selbst einstellt oder auswählt, welche personenbezogenen Informationen sie als "persönlich" oder "öffentlich" ansieht. Es ist alternativ oder zusätzlich denkbar, dass ein Ersteller einer personenbezogenen Information im Informationspaket die Informationen als "persönlich" oder "öffentlich" kennzeichnet. In diesem Fall sind die Informationen somit bereits einzeln typisiert. Wenn neben öffentlichen Informationen - also solchen Informationen, die dem ersten Informationstyp zugeordnet sind - auch persönliche Informationen - also solche Informationen, die dem zweiten Informationstyp zugeordnet sind - vorliegen, werden zwei Sub-Informationspakete erstellt, insbesondere ein öffentliches Informationspaket und ein persönliches Informationspaket. Das öffentliche Informationspaket wird auf dem Bildschirm der Zeit- und/oder Anwesenheitserfassungseinrichtung angezeigt. Die persönlichen Informationen werden auf dem mobilen Endgerät der Person angezeigt. Alternativ oder zusätzlich ist es beispielsweise denkbar, dass der Person auf der Zeit- und/oder Anwesenheitserfassungseinrichtung die folgende Option angezeigt wird:
"Persönliche Informationen für fünf Sekunden anzeigen".

Alternativ oder zusätzlich ist es denkbar, dass die Person die Anzeige auf ihrem mobilen Endgerät über eine Eingabe an der Zeit- und/oder Anwesenheitserfassungseinrichtung anweisen, insbesondere triggern, kann, beispielsweise indem die Person auf dem Bildschirm der Zeit- und/oder Anwesenheitserfassungseinrichtung auswählt:
"Auf dem Mobiltelefon anzeigen".

Die erfindungsgemäße Zeit- und/oder Anwesenheitserfassungseinrichtung ist insbesondere zur Ausführung der durch die Zeit- und/oder Anwesenheitserfassungseinrichtung durchgeführten Schritte eines Verfahrens gemäß einer Ausführungsform der vorliegenden Erfindung konfiguriert.

Ein weiterer Gegenstand der vorliegenden Erfindung ist ein Computerprogrammprodukt, umfassend Befehle, die bei der Ausführung durch Computermittel, insbesondere durch eine Zeit- und/oder Anwesenheitserfassungseinrichtung gemäß einer Ausführungsform der vorliegenden Erfindung oder durch ein System gemäß einer Ausführungsform der vorliegenden Erfindung, diese veranlassen, ein Verfahren gemäß einer Ausführungsform der vorliegenden Erfindung durchzuführen.

Die Merkmale, Ausführungsformen und Vorteile, die im Zusammenhang mit einem der erfindungsgemäßen Gegenstände beschrieben worden sind, können jeweils auch für die weiteren erfindungsgemäßen Gegenstände Anwendung finden. Insbesondere können für die erfindungsgemäße Zeit- und/oder Anwesenheitserfassungseinrichtung, das erfindungsgemäße System, und das erfindungsgemäße Computerprogrammprodukt dabei die Merkmale, Ausführungsformen und Vorteile Anwendung finden, die bereits im Zusammenhang mit dem erfindungsgemäßen Verfahren oder im Zusammenhang mit einer Ausführungsform des erfindungsgemäßen Verfahrens beschrieben worden sind. Insbesondere können für das erfindungsgemäße System, das erfindungsgemäße Verfahren und das erfindungsgemäße Computerprogrammprodukt dabei die Merkmale, Ausführungsformen und Vorteile Anwendung finden, die bereits im Zusammenhang mit der erfindungsgemäßen Zeit- und/oder Anwesenheitserfassungseinrichtung oder im Zusammenhang mit einer Ausführungsform der erfindungsgemäßen Zeit- und/oder Anwesenheitserfassungseinrichtung beschrieben worden sind. Entsprechend können für die erfindungsgemäße Zeit- und/oder Anwesenheitserfassungseinrichtung, das erfindungsgemäße Verfahren und das erfindungsgemäße Computerprogrammprodukt die Merkmale, Ausführungsformen und Vorteile Anwendung finden, die bereits im Zusammenhang mit dem erfindungsgemäßen System oder im Zusammenhang mit einer Ausführungsform des erfindungsgemäßen Systems beschrieben worden sind.

Nachfolgend sollen weitere Vorteile und Einzelheiten der Erfindung anhand der in den Zeichnungen dargestellten Ausführungsbeispiele erläutert werden. Hierin zeigen
- Fig. 1: eine schematische Darstellung eines Systems gemäß einem Ausführungsbeispiel der vorliegenden Erfindung;
- Fig. 2: eine schematische Darstellung eines Systems gemäß einem Ausführungsbeispiel der vorliegenden Erfindung;
- Fig. 3: eine schematische Darstellung eines Systems gemäß einem Ausführungsbeispiel der vorliegenden Erfindung;
- Fig. 4 bis 8: jeweils schematische Darstellungen von Verfahrenen gemäß Ausführungsbeispielen der vorliegenden Erfindung.

In den verschiedenen Figuren sind gleiche Teile stets mit den gleichen Bezugszeichen versehen und werden daher in der Regel auch jeweils nur einmal benannt bzw. erwähnt.

Die vorliegende Erfindung wird in Bezug auf bestimmte Ausführungsformen und mit Bezug auf bestimmte Zeichnungen beschrieben, aber die Erfindung ist nicht darauf beschränkt, sondern nur durch die Ansprüche. Die beschriebenen Zeichnungen sind nur schematisch und nicht einschränkend. In den Zeichnungen kann die Größe einiger Elemente übertrieben sein und nicht im Maßstab zur Veranschaulichung gezeichnet werden.

Wenn ein unbestimmter oder ein bestimmter Artikel verwendet wird und/oder wenn auf ein einzelnes Substantiv Bezug genommen wird, z.B. "ein", "eine", "der", "die", "das", schließt dies einen Plural dieses Substantivs ein, sofern nicht ausdrücklich etwas anderes angegeben ist.

Darüber hinaus werden die Begriffe "erste", "zweite", "dritte" und dergleichen in der Beschreibung und in den Ansprüchen zur Unterscheidung zwischen ähnlichen Elementen und nicht unbedingt zur Beschreibung einer sequentiellen oder chronologischen Reihenfolge verwendet. Es ist zu verstehen, dass die so verwendeten Begriffe unter geeigneten Umständen austauschbar sind und dass die Ausführungsformen der hierin beschriebenen Erfindung in anderer Abfolge als den hierin beschriebenen oder veranschaulichten funktionieren können.

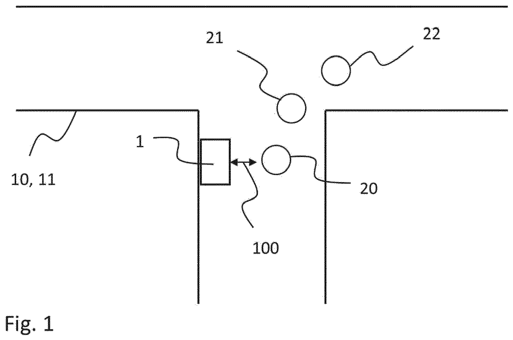

In Fig. 1 ist ein System gemäß einem Ausführungsbeispiel der vorliegenden Erfindung gezeigt. Eine Zeit- und/oder Anwesenheitserfassungseinrichtung 1 zur Zeit- und/oder Anwesenheitserfassung von Personen 20, 21, 22 ist in einem Gebäude 10 oder Areal 11 angeordnet. Typischerweise befindet sich die Zeit- und/oder Anwesenheitserfassungseinrichtung 1 in einem Eingangsbereich oder in Eingangsnähe des Gebäudes, sodass die Personen 20, 21, 22 beim Betreten oder Verlassen des Gebäudes 10 oder Areals 11 mit der Zeit- und/oder Anwesenheitserfassungseinrichtung 1 interagieren können. Bei dem Gebäude 10 oder Areal 11 kann es sich beispielsweise um ein Krankenhaus oder einen Gewerbebetrieb oder ein anderes Unternehmen handeln. Eine Nutzerinteraktion 100 einer Person 20 mit der Zeit- und/oder Anwesenheitserfassungseinrichtung 1 ist beispielhaft durch einen Pfeil dargestellt. Die Nutzerinterkationen können beispielsweise über einen Sensor der Zeit- und/oder Anwesenheitserfassungseinrichtung 1 identifiziert werden und umfassen typischerweise das Erkennen bzw. Auslesen einer Identifikationsinformation der Person 20, um die Anwesenheitszeiten oder Arbeitszeiten der Person 20 nachzuhalten. Es ist denkbar, dass die Person über die Zeit- und/oder Anwesenheitserfassungseinrichtung 1 auf ihre personenbezogenen Daten zugreifen kann und beispielsweise Urlaubstage eintragen oder anfragen kann oder ihre Personalstammdaten einsehen oder ändern kann. Es ist ferner denkbar, dass eine Person 20, 21, 22 über die Zeit- und/oder Anwesenheitserfassungseinrichtung 1 mit einer Personalabteilung des Unternehmens kommunizieren kann, dem die Zeit- und/oder Anwesenheitserfassungseinrichtung 1 zugeordnet ist.

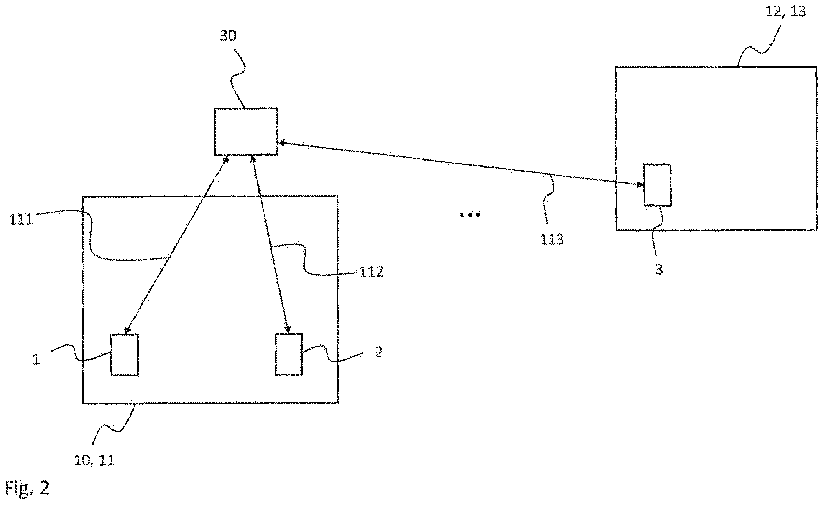

In Fig. 2 ist ein System gemäß einem Ausführungsbeispiel der vorliegenden Erfindung gezeigt. In einem Gebäude 10 oder Areal 11 ist eine Zeit- und/oder Anwesenheitserfassungseinrichtung 1 angeordnet. Ferner ist in dem Gebäude 10 oder Areal 11 eine zusätzliche Zeit- und/oder Anwesenheitserfassungseinrichtung 2 angeordnet, die beispielsweise baugleich zu der Zeit- und/oder Anwesenheitserfassungseinrichtung 1 ausgebildet sein kann. Die Zeit- und/oder Anwesenheitserfassungseinrichtung 1 weist eine Kommunikationsschnittstelle auf, über die eine Kommunikationsverbindung 111 mit einem Serversystem 30 herstellbar ist. Die zusätzliche Zeit- und/oder Anwesenheitserfassungseinrichtung 2 weist ebenso eine

Kommunikationsschnittstelle auf, über die eine Kommunikationsverbindung 112 mit einem Serversystem 30 herstellbar ist. Das Serversystem 30 kann innerhalb oder außerhalb des Gebäudes 10 oder Areals 11 angeordnet sein. Es ist denkbar, dass das Serversystem 30 einen oder mehrere Server umfasst, die an unterschiedlichen Orten bzw. Standorten angeordnet sind.

Ferner ist ein weiteres Gebäude 12 oder weiteres Areal 13 dargestellt, in dem eine weitere Zeit- und/oder Anwesenheitserfassungseinrichtung 3 angeordnet ist. Die weitere Zeit- und/oder Anwesenheitserfassungseinrichtung 3 ist insbesondere dem gleichen Unternehmen oder der gleichen Unternehmensgruppe zugeordnet wie die Zeit- und/oder Anwesenheitserfassungseinrichtung 1. Auch die weitere Zeit- und/oder Anwesenheitserfassungseinrichtung 3 weist eine Kommunikationsschnittstelle auf, über die eine Kommunikationsverbindung 113 mit einem Serversystem 30 herstellbar ist.

Die Kommunikationsverbindungen 111, 112, 113 können jeweils drahtlos und/oder drahtgebunden ausgebildet sein. Die Kommunikationsverbindungen 111, 112, 113 können insbesondere mithilfe eines internen Unternehmensnetzwerks ausgebildet sein.

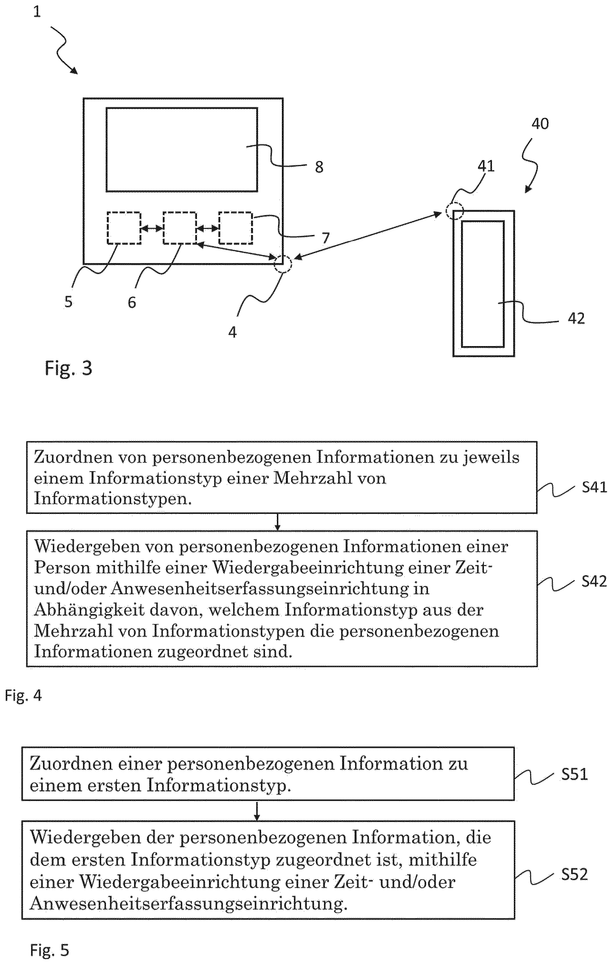

In Fig. 3 ist schematisch eine Zeit- und/oder Anwesenheitserfassungseinrichtung 1 gemäß einem Ausführungsbeispiel der vorliegenden Erfindung gezeigt. Die Zeit- und/oder Anwesenheitserfassungseinrichtung 1 ist zur Zeit- und/oder Anwesenheitserfassung von Personen vorgesehen. Die Zeit- und/oder Anwesenheitserfassungseinrichtung 1 weist einen lokalen Speicher 5 sowie eine Kommunikationsschnittstelle 4 zur Kommunikation mit einem Serversystem 30 über eine Kommunikationsverbindung 111 auf. In dem lokalen Speicher 5 sind personenbezogene Daten speicherbar.

Ferner umfasst die Zeit- und/oder Anwesenheitserfassungseinrichtung 1 eine interne Steuereinrichtung 6, insbesondere Computermittel, sowie einen Sensor 7 zur Detektion von Nutzerinteraktionen, die Nutzer an der Zeit- und/oder Anwesenheitserfassungseinrichtung 1 ausführen. Des Weiteren umfasst die Zeit- und/oder Anwesenheitserfassungseinrichtung 1 eine Wiedergabeeinrichtung 8, beispielsweise einen Bildschirm, auf dem Informationen, insbesondere personenbezogene Informationen, dargestellt werden können. Der Bildschirm kann gleichzeitig in Form eines Touchscreens als Eingabeeinrichtung ausgebildet sein. Es ist alternativ oder zusätzlich denkbar, dass die Zeit- und/oder Anwesenheitserfassungseinrichtung 1 eine von der Wiedergabeeinrichtung 8 separate Eingabeeinrichtung, beispielsweise eine Tastatur oder Knöpfe, aufweist. Alternativ oder zusätzlich kann die Zeit- und/oder Anwesenheitserfassungseinrichtung 1 beispielsweise eine Signallampe aufweisen. Alternativ oder zusätzlich kann die Zeit- und/oder Anwesenheitserfassungseinrichtung 1 beispielsweise auch eine akustische Wiedergabeeinrichtung und/oder eine akustische Eingabeeinrichtung aufweisen.

Die Zeit- und/oder Anwesenheitserfassungseinrichtung 1 ist über ihre Kommunikationsschnittstelle 4 sowie eine Kommunikationsschnittstelle 41 eines mobilen Endgeräts 40 zur Kommunikation mit dem mobilen Endgerät 40 ausgebildet. Das mobile Endgerät 40 ist beispielsweise ein Mobiletelefon, das einer Person zugeordnet ist. Das mobile Endgerät 40 weist einen Bildschirm 42 auf, auf dem Informationen, insbesondere personenbezogene Informationen, darstellbar sind. Der Bildschirm 42 kann gleichzeitig in Form eines Touchscreens als Eingabeeinrichtung ausgebildet sein. Es ist alternativ oder zusätzlich denkbar, dass das mobile Endgerät 40 eine von dem Bildschirm 42 separate Eingabeeinrichtung, beispielsweise eine Tastatur oder mehrere Knöpfe, aufweist. Alternativ oder zusätzlich kann das mobile Endgerät 40 beispielsweise eine Signallampe aufweisen. Alternativ oder zusätzlich das mobile Endgerät 40 beispielsweise auch eine akustische Wiedergabeeinrichtung und/oder eine akustische Eingabeeinrichtung aufweisen. Die Kommunikation zwischen dem mobilen Endgerät 40 und der Zeit- und/oder Anwesenheitserfassungseinrichtung 1 erfolgt typischerweise drahtlos. Es ist alternativ jedoch auch eine drahtgebundene Kommunikation zwischen dem mobilen Endgerät 40 und der Zeit- und/oder Anwesenheitserfassungseinrichtung 1 denkbar.

Mithilfe der in den Figuren 1 bis 3 dargestellten Ausführungsbeispiele ist ein erfindungsgemäßes Verfahren implementierbar.

In Fig. 4 ist schematisch eine Darstellung eines Ausführungsbeispiels der vorliegenden Erfindung gezeigt. In einem Schritt S41 erfolgt ein Zuordnen von personenbezogenen Informationen zu jeweils einem Informationstyp einer Mehrzahl von Informationstypen. Es ist dabei bevorzugt, dass alle personenbezogenen Informationen, die als Teil von personenbezogenen Daten einer Person in einem Serversystem 30 und/oder der Zeit- und/oder Anwesenheitserfassungseinrichtung 1 vorhanden sind, einem Informationstyp der Mehrzahl von Informationstypen zugeordnet werden. Die Mehrzahl von Informationstypen umfasst insbesondere einen ersten Informationstyp und einen zweiten Informationstyp. In einem Schritt S42 erfolgt Wiedergeben von personenbezogenen Informationen einer Person mithilfe einer Wiedergabeeinrichtung 8 einer Zeit- und/oder Anwesenheitserfassungseinrichtung 1 in Abhängigkeit davon, welchem Informationstyp aus der Mehrzahl von Informationstypen die personenbezogenen Informationen zugeordnet sind. Insbesondere werden die personenbezogenen Informationen dabei in Abhängigkeit davon, welchem Informationstyp aus der Mehrzahl von Informationstypen die personenbezogenen Informationen zugeordnet sind, durch die Wiedergabeeinrichtung 8 der Zeit- und/oder Anwesenheitserfassungseinrichtung 1 entweder wiedergegeben oder nicht wiedergegeben.

In Fig. 5 ist schematisch eine Darstellung eines Ausführungsbeispiels der vorliegenden Erfindung gezeigt. In einem Schritt S51 erfolgt ein Zuordnen einer personenbezogenen Information zu einem ersten Informationstyp. Der erste Informationstyp ist dabei insbesondere für öffentliche Informationen vorgesehen. In einem Schritt S52 erfolgt ein Wiedergeben der personenbezogenen Information, die dem ersten Informationstyp zugeordnet ist, mithilfe einer Wiedergabeeinrichtung 8 einer Zeit- und/oder Anwesenheitserfassungseinrichtung 1.

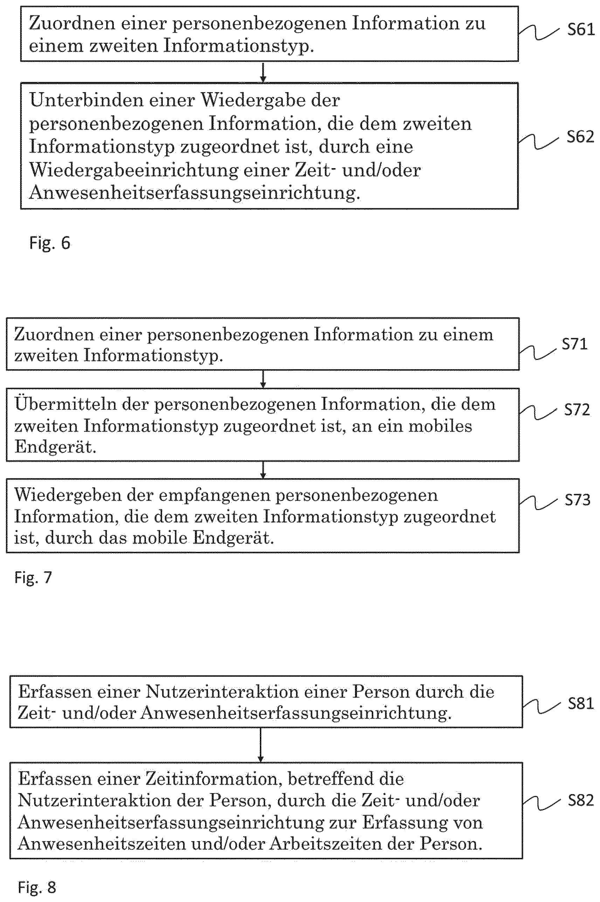

In Fig. 6 ist schematisch eine Darstellung eines Ausführungsbeispiels der vorliegenden Erfindung gezeigt. In einem Schritt S61 erfolgt ein Zuordnen einer personenbezogenen Information zu einem zweiten Informationstyp. Der zweite Informationstyp ist dabei insbesondere für private bzw. nicht-öffentliche Informationen vorgesehen. In einem Schritt S62 erfolgt ein Unterbinden einer Wiedergabe der personenbezogenen Information, die dem zweiten Informationstyp zugeordnet ist, durch eine Wiedergabeeinrichtung 8 einer Zeit- und/oder Anwesenheitserfassungseinrichtung 1.

In Fig. 7 ist schematisch eine Darstellung eines Ausführungsbeispiels der vorliegenden Erfindung gezeigt. In einem Schritt S71 erfolgt ein Zuordnen einer personenbezogenen Information zu einem zweiten Informationstyp. In einem Schritt S72 erfolgt ein Übermitteln der personenbezogenen Information, die dem zweiten Informationstyp zugeordnet ist, an ein mobiles Endgerät 40. Die personenbezogene Information, die dem zweiten Informationstyp zugeordnet ist, wird dabei von der Zeit- und/oder Anwesenheitserfassungseinrichtung 1 oder von einem Serversystem 30 and das mobile Endgerät 40 übermittelt. In einem Schritt S73 erfolgt ein Wiedergeben der empfangenen personenbezogenen Information, die dem zweiten Informationstyp zugeordnet ist, durch das mobile Endgerät 40. Beispielweise wird die empfangene personenbezogene Information, die dem zweiten Informationstyp zugeordnet ist, mithilfe des Bildschirms 42 des mobilen Endgeräts dargestellt. Hierdurch kann eine besonders hohe Datensicherheit erreicht werden, da die personenbezogene Information, die dem zweiten Informationstyp zugeordnet ist, nicht durch die Wiedergabeeinrichtung 8 der Zeit- und/oder Anwesenheitserfassungseinrichtung 1 wiedergegeben wird, und somit nicht durch umstehende Dritte wahrgenommen werden kann. Stattdessen erfolgt eine Übermittlung der personenbezogenen Information, die dem zweiten Informationstyp zugeordnet ist, an das mobile Endgerät 40 der betroffenen Person, sodass diese Person die Information innerhalb ihrer Privatsphäre wahrnehmen kann.

In Fig. 8 ist schematisch eine Darstellung eines Ausführungsbeispiels der vorliegenden Erfindung gezeigt. Fig. 8 betrifft insbesondere die Erfassung von Buchungen bzw. Nutzerinteraktionen mithilfe einer erfindungsgemäßen Zeit- und/oder Anwesenheitserfassungseinrichtung 1. In einem Schritt S81 erfolgt ein Erfassen einer Nutzerinteraktion einer Person durch die Zeit- und/oder Anwesenheitserfassungseinrichtung 1. In einem Schritt S82 erfolgt ein Erfassen einer Zeitinformation, betreffend die Nutzerinteraktion der Person, durch die Zeit- und/oder Anwesenheitserfassungseinrichtung 1 zur Erfassung von Anwesenheitszeiten und/oder Arbeitszeiten der Person. Derart erfasste Zeitinformationen und/oder weitere personenbezogene Daten können dann in dem lokalen Speicher 5 der Zeit- und/oder Anwesenheitserfassungseinrichtung 1 gespeichert werden und/oder an das Serversystem 30 übermittelt werden.

Merkmale der in den Figuren 4 bis 8 dargestellten Ausführungsbeispiele können untereinander kombiniert werden.

### Bezugszeichenliste

- 1: Zeit- und/oder Anwesenheitserfassungseinrichtung
- 2: zusätzliche Zeit- und/oder Anwesenheitserfassungseinrichtung
- 3: weitere Zeit- und/oder Anwesenheitserfassungseinrichtung
- 4: Kommunikationsschnittstelle
- 5: lokaler Speicher
- 6: Steuereinrichtung
- 7: Sensor
- 8: Wiedergabeeinrichtung
- 10: Gebäude
- 11: Areal
- 12: weiteres Gebäude
- 13: weiteres Areal
- 20 bis 22: Personen
- 30: Serversystem
- 40: mobiles Endgerät
- 41: Kommunikationsschnittstelle
- 42: Bildschirm
- 100: Nutzerinteraktion
- 111 bis 113: Kommunikationsverbindungen
- S41 - S42: Schritte
- S51 - S52: Schritte
- S61 - S62: Schritte
- S71 - S73: Schritte
- S81 - S82: Schritte

## Patentansprüche

1. Zeit- und/oder Anwesenheitserfassungseinrichtung (1), wobei die Zeit- und/oder Anwesenheitserfassungseinrichtung (1) eine Wiedergabeeinrichtung (8) aufweist,
wobei die Zeit- und/oder Anwesenheitserfassungseinrichtung (1) derart konfiguriert ist, dass eine Wiedergabe von personenbezogenen Informationen einer Person (20) mithilfe der Wiedergabeeinrichtung (8) in Abhängigkeit davon erfolgt, welchem Informationstyp aus einer Mehrzahl von Informationstypen die personenbezogenen Informationen zugeordnet sind,
wobei die Mehrzahl von Informationstypen zumindest einen ersten Informationstyp umfasst, wobei die Zeit- und/oder Anwesenheitserfassungseinrichtung (1) derart konfiguriert ist, dass personenbezogenen Informationen, die dem ersten Informationstyp zugeordnet sind, mithilfe der Wiedergabeeinrichtung (8) wiedergebbar sind,
wobei die Mehrzahl von Informationstypen zumindest einen zweiten Informationstyp umfasst,
wobei die Zeit- und/oder Anwesenheitserfassungseinrichtung (1) derart konfiguriert ist, dass eine Wiedergabe durch die Wiedergabeeinrichtung (8) von personenbezogenen Informationen, die dem zweiten Informationstyp zugeordnet sind, unterbunden wird,
wobei die Zeit- und/oder Anwesenheitserfassungseinrichtung (1) derart konfiguriert ist, dass über eine Nutzereingabe mithilfe einer Eingabeeinrichtung der Zeit- und/oder Anwesenheitserfassungseinrichtung (1) durch eine Person (20) festlegbar und/oder auswählbar ist, dass personenbezogene Informationen der Person (20), die dem zweiten Informationstyp zugeordnet sind, durch die Wiedergabeeinrichtung (8) wiedergegeben werden.

2. Zeit- und/oder Anwesenheitserfassungseinrichtung (1) nach Anspruch 1, wobei die Zeit- und/oder Anwesenheitserfassungseinrichtung (1) derart konfiguriert ist, dass über eine Nutzereingabe mithilfe einer Eingabeeinrichtung der Zeit- und/oder Anwesenheitserfassungseinrichtung (1) durch eine Person (20) festlegbar und/oder auswählbar ist, dass personenbezogene Informationen der Person (20), die dem zweiten Informationstyp zugeordnet sind, durch die Wiedergabeeinrichtung (8) für eine festgelegte oder festlegbare Zeitspanne wiedergegeben werden.

3. Zeit- und/oder Anwesenheitserfassungseinrichtung (1) nach einem der vorhergehenden Ansprüche, wobei die Zeit- und/oder Anwesenheitserfassungseinrichtung (1) derart konfiguriert ist, dass über eine Nutzereingabe mithilfe einer Eingabeeinrichtung der Zeit- und/oder Anwesenheitserfassungseinrichtung (1) durch eine Person (20) eine manuelle Zuordnung von personenbezogenen Informationen der Person (20) zu einem oder mehreren Informationstypen der Mehrzahl von Informationstypen festlegbar und/oder auswählbar ist, vorzugsweise derart, dass die personenbezogenen Informationen durch die Person (20) zumindest dem ersten Informationstyp und/oder dem zweiten Informationstyp zuordenbar sind.

4. Zeit- und/oder Anwesenheitserfassungseinrichtung (1) nach einem der vorhergehenden Ansprüche, wobei die Wiedergabeeinrichtung (8) der Zeit- und/oder Anwesenheitserfassungseinrichtung (1) als optische Wiedergabeeinrichtung (8), insbesondere als Bildschirm, ausgebildet ist.

5. Zeit- und/oder Anwesenheitserfassungseinrichtung (1) nach einem der vorhergehenden Ansprüche, wobei die Zeit- und/oder Anwesenheitserfassungseinrichtung (1) eine Kommunikationsschnittstelle (4) zur Kommunikation mit einem Serversystem (30) über eine Kommunikationsverbindung (111) aufweist, wobei die Zeit- und/oder Anwesenheitserfassungseinrichtung (1)
--- zum Empfangen und/oder Abrufen von personenbezogenen Daten, aufweisend personenbezogene Informationen, von dem Serversystem (30) konfiguriert ist; und/oder
--- zum Übermitteln von personenbezogenen Daten, aufweisend personenbezogene Informationen, an das Serversystem (30) konfiguriert ist.

6. Zeit- und/oder Anwesenheitserfassungseinrichtung (1) nach einem der vorhergehenden Ansprüche, wobei die Zeit- und/oder Anwesenheitserfassungseinrichtung (1) einen lokalen Speicher (5) aufweist oder mit einem lokalen Speicher (5) verbunden ist, wobei die Zeit- und/oder Anwesenheitserfassungseinrichtung (1) zum Speichern personenbezogener Daten, aufweisend personenbezogene Informationen, konfiguriert ist.

7. Zeit- und/oder Anwesenheitserfassungseinrichtung (1) nach einem der Ansprüche 1 bis 6, wobei die Zeit- und/oder Anwesenheitserfassungseinrichtung (1) derart konfiguriert ist, dass personenbezogene Informationen, die dem zweiten Informationstyp zugeordnet sind, von der Zeit- und/oder Anwesenheitserfassungseinrichtung (1) an ein mobiles Endgerät (40) der Person (20) übermittelt werden.

8. System, aufweisend eine Zeit- und/oder Anwesenheitserfassungseinrichtung (1) nach einem der Ansprüche 1 bis 7 und ein mobiles Endgerät (40), wobei das mobile Endgerät (40) der Person (20) zugeordnet ist,
wobei das System derart konfiguriert ist, dass personenbezogene Informationen, die dem zweiten Informationstyp zugeordnet sind, von dem Serversystem (30) oder der Zeit- und/oder Anwesenheitserfassungseinrichtung (1) an das mobiles Endgerät (40) der Person (20) übermittelt werden, wobei das mobile Endgerät (40) vorzugsweise zur Wiedergabe der übermittelten personenbezogene Informationen, die dem zweiten Informationstyp zugeordnet sind, konfiguriert ist.

9. System nach Anspruch 8, wobei das System derart konfiguriert ist, dass die Übermittlung der personenbezogenen Informationen, die dem zweiten Informationstyp zugeordnet sind, von dem Serversystem (30) oder der Zeit- und/oder Anwesenheitserfassungseinrichtung (1) an das mobile Endgerät (40) über eine Nutzereingabe mithilfe einer Eingabeeinrichtung der Zeit- und/oder Anwesenheitserfassungseinrichtung (1) durch die Person (20) anweisbar ist.

10. Verfahren zum Betreiben einer Zeit- und/oder Anwesenheitserfassungseinrichtung (1) nach einem der Ansprüche 1 bis 7,
wobei das Verfahren zumindest den folgenden Schritt umfasst:
- Wiedergeben von personenbezogenen Informationen einer Person (20) mithilfe der Wiedergabeeinrichtung (8) in Abhängigkeit davon, welchem Informationstyp aus einer Mehrzahl von Informationstypen die personenbezogenen Informationen zugeordnet sind,
wobei die Mehrzahl von Informationstypen zumindest einen ersten Informationstyp umfasst,
wobei die Mehrzahl von Informationstypen zumindest einen zweiten Informationstyp umfasst,
wobei das Verfahren ferner umfasst:
Wiedergeben von personenbezogenen Informationen, die dem ersten Informationstyp zugeordnet sind, mithilfe der Wiedergabeeinrichtung (8),
Unterbinden einer Wiedergabe durch die Wiedergabeeinrichtung (8) von personenbezogenen Informationen, die dem zweiten Informationstyp zugeordnet sind, und
Festlegen und/oder Auswählen durch eine Person (20) über eine Nutzereingabe mithilfe einer Eingabeeinrichtung der Zeit- und/oder Anwesenheitserfassungseinrichtung (1), dass personenbezogene Informationen der Person (20), die dem zweiten Informationstyp zugeordnet sind, durch die Wiedergabeeinrichtung (8) wiedergegeben werden.

11. Verfahren nach Anspruch 10, wobei in einem Serversystem (30) und/oder in einem lokalen Speicher (5) der Zeit- und/oder Anwesenheitserfassungseinrichtung (1) personenbezogene Daten gespeichert sind, wobei die personenbezogenen Daten der Person (20) mehrere personenbezogene Informationen umfassen,
wobei das Verfahren den folgenden Schritt umfasst:
- Zuordnen der personenbezogenen Informationen zu jeweils einem Informationstyp der Mehrzahl von Informationstypen, vorzugsweise wobei alle in den personenbezogenen Daten der Person (20) vorhandenen personenbezogene Informationen einem Informationstyp der Mehrzahl von Informationstypen zugeordnet werden.

12. Verfahren nach einem der Ansprüche 10 oder 11, wobei das Zuordnen der personenbezogenen Informationen zu einem Informationstyp der Mehrzahl von Informationstypen in Abhängigkeit einer durch die Person (20) getroffenen Wahl und/oder in Abhängigkeit von durch die Person (20) festgelegten Kriterien erfolgt.

13. Computerprogrammprodukt, umfassend Befehle, die bei der Ausführung durch Computermittel, insbesondere durch eine Zeit- und/oder Anwesenheitserfassungseinrichtung (1) gemäß einem der Ansprüche 1 bis 7 oder durch ein System gemäß einem der Ansprüche 8 oder 9, diese veranlassen, ein Verfahren nach einem der Ansprüche 10 oder 11 durchzuführen.

## Claims

1. A time and/or attendance recording device (1), wherein the time and/or attendance recording device (1) has a playback device (8),
wherein the time and/or attendance recording device (1) is configured in such manner that a reproduction of personal information of a person (20) is carried out using the playback device (8) depending on to which information type from a plurality of information types the personal information is assigned,
wherein the plurality of information types comprises at least a first information type, wherein the time and/or attendance recording device (1) is configured in such manner that personal information, which is assigned to the first information type, can be reproduced using the playback device (8),
wherein the plurality of information types comprises at least a second information type,
wherein the time and/or attendance recording device (1) is configured in such manner that a reproduction by the playback device (8) of personal information, which is assigned to the second information type, is prevented, wherein the time and/or attendance recording device (1) is configured in such manner that via a user input using an input device of the time and/or
attendance recording device (1), it can be specified and/or selected by a person (20) that personal information of the person (20), which is assigned to the second information type, is reproduced by the playback device (8).

2. The time and/or attendance recording device (1) according to claim 1, wherein the time and/or attendance recording device (1) is configured in such manner that via a user input using an input device of the time and/or
attendance recording device (1), it can be specified and/or selected by a person (20) that personal information of the person (20), which is assigned to the second information type, is reproduced by the playback device (8) for a specified or specifiable period of time.

3. The time and/or attendance recording device (1) according to one of the preceding claims, wherein the time and/or attendance recording device (1) is configured in such manner that a manual assignment of personal information of the person (20) to one or a plurality of information types of the plurality of information types can be specified and/or selected by a person (20) via a user input using an input device of the time and/or attendance recording device (1), preferably in such manner that the personal information can be assigned by the person (20) to at least the first information type and/or the second information type.

4. The time and/or attendance recording device (1) according to one of the preceding claims, wherein the playback device (8) of the time and/or attendance recording device (1) is designed as an optical playback device (8), in particular as a screen.

5. The time and/or attendance recording device (1) according to one of the preceding claims, wherein the time and/or attendance recording device (1) has a communication interface (4) for communication with a server system (30) via a communication connection (111), wherein the time and/or attendance recording device (1)
--- is configured to receive and/or retrieve personal data comprising personal information from the server system (30); and/or
--- is configured to transmit personal data comprising personal information to the server system (30).

6. The time and/or attendance recording device (1) according to one of the preceding claims, wherein the time and/or attendance recording device (1) has a local memory (5) or is connected to a local memory (5), wherein the time and/or attendance recording device (1) is configured to store personal data comprising personal information.

7. The time and/or attendance recording device (1) according to one of claims 1 to 6, wherein the time and/or
attendance recording device (1) is configured in such manner that personal information, which is assigned to the second information type, is transmitted from the time and/or
attendance recording device (1) to a mobile terminal (40) of the person (20).

8. A system having a time and/or attendance recording device (1) according to one of claims 1 to 7 and a mobile terminal (40), wherein the mobile terminal (40) is assigned to the person (20),
wherein the system is configured in such manner that personal information, which is assigned to the second information type, is transmitted from the server system (30) or the time and/or
attendance recording device (1) to the mobile terminal (40) of the person (20), wherein the mobile terminal (40) is preferably configured to reproduce the transmitted personal information, which is assigned to the second information type.

9. The system according to claim 8, wherein the system is configured in such manner that the transmission of the personal information, which is assigned to the second information type, from the server system (30) or the time and/or attendance recording device (1) to the mobile terminal (40) via a user input using an input device of the time and/or
attendance recording device (1) can be instructed by the person (20).

10. A method for operating a time and/or
attendance recording device (1) according to one of claims 1 to 7, wherein the method comprises at least the following step:
- reproducing personal information of a person (20) using the playback device (8) depending on to which information type from a plurality of information types the personal information is assigned,
wherein the plurality of information types comprises at least a first information type,
wherein the plurality of information types comprises at least a second information type,
wherein the method further comprises:
reproducing personal information, which is assigned to the first information type, using the playback device (8),
preventing reproduction by the playback device (8) of personal information, which is assigned to the second information type, and
specifying and/or selecting by a person (20) via a user input using an input device of the time and/or attendance recording device (1) that personal information of the person (20), which is assigned to the second information type, is reproduced by the playback device (8).

11. The method according to claim 10, wherein personal data is stored in a server system (30) and/or in a local memory (5) of the time and/or attendance recording device (1), wherein the personal data of the person (20) comprises a plurality of personal information items,
wherein the method comprises the following step:
- assigning the personal information to one information type of the plurality of information types, preferably wherein all personal information present in the personal data of the person (20) is assigned to one information type of the plurality of information types.

12. The method according to one of claims 10 or 11, wherein the assignment of the personal information to an information type of the plurality of information types takes place depending on a choice made by the person (20) and/or depending on criteria specified by the person (20).

13. A computer programme product comprising commands which, when executed by computer means, in particular by a time and/or attendance recording device (1) according to one of claims 1 to 7 or by a system according to one of claims 8 or 9, cause the latter to carry out a method according to one of claims 10 or 11.

## Revendications

1. Dispositif de détection d'heure et/ou de présence (1), dans lequel le dispositif de détection d'heure et/ou de présence (1) présente un dispositif de lecture (8),
dans lequel le dispositif de détection d'heure et/ou de présence (1) est configuré de telle sorte que les informations à caractère personnel d'une personne (20) sont lues à l'aide du dispositif de lecture (8), en fonction, du type d'informations parmi une pluralité de types d'informations auquel les informations à caractère personnel sont affectées,
dans lequel la pluralité de types d'informations comprend au moins un premier type d'informations, dans lequel le dispositif de détection d'heure et/ou de présence (1) est configuré de telle sorte que des informations à caractère personnel, qui sont affectées au premier type d'information, peuvent être lues à l'aide du dispositif de lecture (8),
dans lequel la pluralité de types d'informations comprend au moins un second type d'informations,
dans lequel le dispositif de détection d'heure et/ou de présence (1) est configuré de telle sorte qu'une lecture par le dispositif de lecture (8) d'informations à caractère personnel, qui sont affectés au second type d'informations, est empêchée, dans lequel le dispositif de détection d'heure et/ou de présence (1) est configuré de telle sorte que, par l'intermédiaire d'une entrée utilisateur à l'aide d'un dispositif d'entrée du dispositif
de détection d'heure et/ou de présence (1) il est possible d'établir et/ou de sélectionner par une personne (20) que les informations à caractère personnel de la personne (20), qui sont affectées au second type d'informations, soient lues par le dispositif de lecture (8).

2. Dispositif de détection d'heure et/ou de présence (1) selon la revendication 1, dans lequel le dispositif de détection d'heure et/ou de présence (1) est configuré de telle sorte que, par l'intermédiaire d'une entrée utilisateur à l'aide d'un dispositif d'entrée du dispositif
de détection d'heure et/ou de présence (1) il est possible d'établir et/ou de sélectionner par une personne (20) que les informations à caractère personnel de la personne (20), qui sont affectées au second type d'informations, soient lues par le dispositif de lecture (8) pendant une durée établie ou pouvant être établie.

3. Dispositif de détection d'heure et/ou de présence (1) selon l'une des revendications précédentes, dans lequel le dispositif de détection d'heure et/ou de présence (1) est configuré de telle sorte que, par l'intermédiaire d'une entrée utilisateur à l'aide d'un dispositif d'entrée du dispositif de détection d'heure et/ou de présence (1), une personne (20) peut établir et/ou sélectionner une affectation manuelle d'informations à caractère personnel de la personne (20) à un ou plusieurs types d'informations de la pluralité de types d'informations, de préférence de telle sorte que les informations à caractère personnel peuvent être affectées par la personne (20) au moins au premier type d'informations et/ou au second type d'informations.

4. Dispositif de détection d'heure et/ou de présence (1) selon l'une des revendications précédentes, dans lequel le dispositif de lecture (8) du dispositif de détection d'heure et/ou de présence (1) est réalisé comme un dispositif de lecture optique (8), en particulier comme écran .

5. Dispositif de détection d'heure et/ou de présence (1) selon l'une des revendications précédentes, dans lequel le dispositif de détection d'heure et/ou de présence (1) présente une interface de communication (4) pour la communication avec un système serveur (30) par l'intermédiaire d'une connexion de communication (111), dans lequel le dispositif de détection d'heure et/ou de présence (1) est configuré
--- pour recevoir et/ou appeler des données à caractère personnel, présentant des informations à caractère personnel, du système serveur (30) ; et/ou
--- pour transmettre des données à caractère personnel, présentant des informations à caractère personnel, au système serveur (30).

6. Dispositif de détection d'heure et/ou de présence (1) selon l'une des revendications précédentes, dans lequel le dispositif de détection d'heure et/ou de présence (1) présente une mémoire locale (5) ou est connecté à une mémoire locale (5), dans lequel le dispositif de détection d'heure et/ou de présence (1) est configuré pour stocker des données à caractère personnel, présentant des informations à caractère personnel.

7. Dispositif de détection d'heure et/ou de présence (1) selon l'une des revendications 1 à 6, dans lequel le dispositif
de détection d'heure et/ou de présence (1) est configuré de telle sorte que les informations à caractère personnel, qui sont affectées au second type d'informations, sont transmises par
le dispositif de détection d'heure et/ou de présence (1) à un terminal mobile (40) de la personne (20).

8. Système, présentant un dispositif de détection d'heure et/ou de présence (1) selon l'une des revendications 1 à 7 et un terminal mobile (40), dans lequel le terminal mobile (40) est affecté à la personne (20),
dans lequel le système est configuré de telle sorte que les informations à caractère personnel, qui sont affectées au second type d'informations, sont transmises du système serveur (30) ou du dispositif
de détection d'heure et/ou de présence (1) au terminal mobile (40) de la personne (20), dans lequel le terminal mobile (40) est configuré de préférence pour lire les informations à caractère personnel transmises, qui sont affectées au second type d'informations .

9. Système selon la revendication 8, dans lequel le système est configuré de telle sorte que la transmission d'informations à caractère personnel, qui sont affectées au second type d'informations du système serveur (30) ou du dispositif de détection d'heure et/ou de présence (1) au terminal mobile (40) peut être ordonnée par l'intermédiaire d'une entrée utilisateur à l'aide d'un dispositif d'entrée du dispositif
de détection d'heure et/ou de présence (1) par la personne (20).

10. Procédé permettant de faire fonctionner un dispositif
de détection d'heure et/ou de présence (1) selon l'une des revendications 1 à 7, dans lequel le procédé comprend au moins l'étape suivante :
- lecture des informations à caractère personnel d'une personne (20) à l'aide du dispositif de lecture (8) en fonction, du type d'informations parmi une pluralité de types d'informations auquel les informations à caractère personnel sont affectées,
dans lequel la pluralité de types d'informations comprend au moins un premier type d'informations,
dans lequel la pluralité de types d'informations comprend au moins un second type d'informations,
dans lequel le procédé comprend en outre :
la lecture des informations à caractère personnel, qui sont affectées au premier type d'information, à l'aide du dispositif de lecture (8),
l'interdiction de la lecture par le dispositif de lecture (8) d'informations à caractère personnel, qui sont affectées au second type d'informations et
l'établissement et/ou la sélection par une personne (20) par l'intermédiaire d'une entrée utilisateur à l'aide d'un dispositif d'entrée du dispositif de détection d'heure et/ou de présence (1), que des informations à caractère personnel de la personne (20), qui sont affectées au second type d'informations soient lues par le dispositif de lecture (8).

11. Procédé selon la revendication 10, dans lequel des données à caractère personnel sont stockées dans un système serveur (30) et/ou dans une mémoire locale (5) du dispositif de détection d'heure et/ou de présence (1), dans lequel les données à caractère personnel de la personne (20) comprennent plusieurs informations à caractère personnel,
dans lequel le procédé comprend l'étape suivante :
- affectation des informations à caractère personnel à un type d'informations respectif de la pluralité de types d'informations, de préférence, dans lequel toutes les informations à caractère personnel présentes dans les données à caractère personnel de la personne (20) sont attribuées à un type d'informations de la pluralité de types d'informations.

12. Procédé selon l'une des revendications 10 ou 11, dans lequel l'affectation des informations à caractère personnel à un type d'informations de la pluralité de types d'informations a lieu en fonction d'un choix effectué par la personne (20) et/ou en fonction de critères établis par la personne (20).

13. Produit-programme informatique, comprenant des commandes, qui, lorsqu'elles sont exécutées par des moyens informatiques, en particulier par un dispositif de détection d'heure et/ou de présence (1) selon l'une des revendications 1 à 7 ou par un système selon l'une des revendications 8 ou 9, les amènent à réaliser un procédé selon l'une des revendications 10 ou 11.
